# FASCICULE DE BREVET EUROPEEN

(11) **EP 4 253 822 B1**
(45) Date de publication et mention de la délivrance du brevet: **15.07.2026**
(21) Numéro de dépôt: 23162181.4
(22) Date de dépôt: 15.03.2023
(51) Int. Cl.: F17C 5/06, F17C 6/00, F17C 9/02, F17C 9/04

(54) **SYSTÈME D'ALIMENTATION EN GAZ POUR APPAREILS CONSOMMATEURS DE GAZ À HAUTE ET BASSE PRESSION ET PROCÉDÉ DE CONTRÔLE D'UN TEL SYSTÈME**
GASVERSORGUNGSSYSTEM FÜR GASVERBRAUCHERGERÄTE MIT HOHEM UND NIEDRIGEM DRUCK UND VERFAHREN ZUR STEUERUNG EINES SOLCHEN SYSTEMS
GAS SUPPLY SYSTEM FOR HIGH AND LOW PRESSURE GAS CONSUMING DEVICES AND METHOD FOR CONTROLLING SUCH A SYSTEM

(30) Priorité: 31.03.2022 FR 2202941
(43) Date de publication de la demande: 04.10.2023
(73) Titulaire: GAZTRANSPORT ET TECHNIGAZ, 78470 Saint-Rémy-lès-Chevreuse (FR)
(72) Inventeur: MOUSSAOUI, Selma, 78470 SAINT REMY LES CHEVREUSE (FR); NARME, Romain, 78470 SAINT REMY LES CHEVREUSE (FR); AOUN, Bernard, 78470 SAINT REMY LES CHEVREUSE (FR)
(74) Mandataire: Ex Materia

(56) Documents cités:
- EP-A1- 3 483 419

## Description

La présente invention se rapporte au domaine des navires de stockage et/ou de transport de gaz à l'état liquide et concerne plus particulièrement un système d'alimentation en gaz pour appareils consommateurs compris au sein de tels navires, ainsi qu'un procédé de contrôle d'un tel système.

Au cours d'un trajet effectué par un navire comprenant une cuve de gaz à l'état liquide destiné à être consommé et/ou à être livré vers un point de destination, ledit navire peut être apte à utiliser au moins une partie dudit gaz à l'état liquide afin d'alimenter au moins l'un de ses moteurs, et ce via un système d'alimentation en gaz. C'est le cas des navires pourvus d'un moteur de propulsion haute pression de type ME-GI. Afin d'alimenter ce type de moteur, le gaz doit être comprimé à très haute pression par des compresseurs spéciaux aptes à comprimer le gaz jusqu'à 300 bars absolus, mais de tels compresseurs sont chers, engendrent des frais de maintenance conséquents et induisent des vibrations au sein du navire.

Une alternative à l'installation de ces compresseurs à haute pression est de vaporiser le gaz sous forme liquide à 300 bars absolus, notamment à l'aide d'une pompe haute pression, avant que ce dernier ne soit envoyé au moteur de propulsion. Une telle solution ne permettant pas d'éliminer le gaz sous forme vapeur (ou BOG, qui en anglais signifie « Boil-Off Gas ») se formant naturellement au sein d'une cuve contenant au moins partiellement la cargaison, des compresseurs basse pression peuvent être installés pour alimenter un moteur auxiliaire, capable de consommer le gaz sous forme vapeur à basse pression. L'excès de gaz sous forme vapeur peut recirculer jusqu'à la cuve en étant recondensé par le gaz à l'état liquide alimentant l'appareil consommateur de gaz à haute pression.

Ce type de système présente toutefois des contraintes à respecter. Ainsi, la pompe haute pression ne peut pomper que du gaz à l'état liquide et risque d'être endommagée en cas de passage de gaz à l'état vapeur. Il faut donc veiller à ce que le gaz à l'état liquide ne s'évapore pas lors de l'échange de chaleur avec le gaz à l'état vapeur. Ce dernier doit toutefois être recondensé afin de garantir l'efficacité du système. Le document EP3483419 décrit un système d'alimentation en gaz d'au moins un appareil consommateur de gaz à haute pression et d'au moins un appareil consommateur de gaz à basse pression d'un ouvrage flottant selon l'art antérieur.

La présente invention vise à résoudre de telles problématiques en proposant un système d'alimentation en gaz d'au moins un appareil consommateur de gaz à haute pression et d'au moins un appareil consommateur de gaz à basse pression d'un ouvrage flottant comprenant au moins une cuve configurée pour contenir le gaz, le système d'alimentation étant tel que définit par la revendication 1.

La présence de ce dispositif de gestion permet donc de réguler le gaz circulant au sein des différentes parties du système d'alimentation afin de maximiser la condensation du gaz à l'état vapeur circulant dans la ligne de retour, tout en évitant l'évaporation prématurée du gaz à l'état liquide circulant dans le premier circuit d'alimentation. La température et/ou la pression du gaz est ainsi déterminée ou mesurée à différents endroits du système d'alimentation, permettant ainsi de déterminer à quel point il est possible d'agir sur l'organe de régulation et donc d'améliorer les performances dudit système d'alimentation.

Le premier circuit d'alimentation en gaz permet de subvenir aux besoins en carburant de l'appareil consommateur de gaz à haute pression. Par premier circuit d'alimentation en gaz de l'appareil consommateur de gaz à haute pression, on comprend que le premier circuit d'alimentation est configuré pour alimenter en gaz l'appareil consommateur de gaz à haute pression. Ce dernier peut par exemple être le moyen de propulsion de l'ouvrage flottant, par exemple un moteur ME-GI. Le premier circuit d'alimentation s'étend de la cuve jusqu'à l'appareil consommateur de gaz à haute pression.

Le gaz devant être à l'état vapeur pour pouvoir alimenter l'appareil consommateur de gaz à haute pression, l'évaporateur haute pression garantit l'évaporation du gaz avant sa fourniture à l'appareil consommateur de gaz à haute pression. L'évaporateur haute pression est le siège d'un échange de calories entre le gaz à l'état liquide circulant dans le premier circuit d'alimentation et un fluide caloporteur, par exemple de l'eau glycolée, de l'eau de mer ou de la vapeur d'eau. Ce fluide caloporteur, quel que soit sa forme, doit être à une température suffisamment élevée pour créer un changement d'état du gaz afin que ce dernier passe à l'état vapeur ou supercritique et alimente l'appareil consommateur de gaz à haute pression.

D'une manière préférentielle, le deuxième échangeur de chaleur et l'évaporateur haute pression forment un unique échangeur de chaleur. Une telle configuration peut être avantageuse par exemple afin de réduire l'encombrement mécanique du système d'alimentation. Le gaz à l'état liquide, en traversant l'unique échangeur de chaleur, échange ses calories avec le gaz à l'état vapeur circulant dans la ligne de retour, et est également évaporé simultanément ou successivement.

D'une manière alternative, le deuxième échangeur de chaleur et l'évaporateur haute pression peuvent être deux échangeurs de chaleur distincts l'un de l'autre.

La pompe est interposée entre le premier échangeur de chaleur et le deuxième échangeur de chaleur. C'est la pompe qui permet d'augmenter la pression du gaz à l'état liquide circulant dans le premier circuit d'alimentation, et ce afin que celui-ci présente une pression compatible pour l'alimentation de l'appareil consommateur de gaz à haute pression. La disposition optimale consiste à mettre en place la pompe entre les deux échangeurs de chaleur. Il est donc indispensable de veiller à ce que le gaz circulant dans le premier circuit d'alimentation et traversant le premier échangeur de chaleur demeure à l'état liquide en sortie de celui-ci.

D'une manière générale, le gaz contenu dans la cuve peut passer de manière naturelle, ou forcée par l'ouvrage flottant, à l'état vapeur. Le gaz au sein de la cuve passant à l'état vapeur doit être évacué afin de ne pas créer de surpression au sein de la cuve.

Une telle fonction est assurée par le deuxième circuit d'alimentation en gaz de l'appareil consommateur de gaz à basse pression. Un tel deuxième circuit d'alimentation s'étend de la cuve jusqu'à l'appareil consommateur de gaz à basse pression. Par deuxième circuit d'alimentation en gaz de l'appareil consommateur de gaz à basse pression, on comprend que le deuxième circuit d'alimentation est configuré pour alimenter en gaz l'appareil consommateur de gaz à basse pression. Ce dernier peut par exemple être un moteur auxiliaire tel qu'un générateur électrique. Le compresseur disposé sur le deuxième circuit d'alimentation est chargé d'aspirer le gaz présent dans le ciel de la cuve afin de pouvoir à la fois alimenter l'appareil consommateur de gaz à basse pression mais aussi de réguler la pression au sein de la cuve.

En sortie du compresseur, le gaz à l'état vapeur peut alimenter l'appareil consommateur de gaz à basse pression, et/ou circuler à travers la ligne de retour si l'appareil consommateur de gaz à basse pression ne nécessite pas ou peu d'apport en carburant. La ligne de retour étant connectée en aval du compresseur, le gaz à l'état vapeur aspiré par le compresseur peut donc y circuler.

Le gaz à l'état vapeur circulant dans la ligne de retour traverse dans un premier temps le deuxième échangeur de chaleur, puis le premier échangeur de chaleur, avant de retourner dans la cuve. Selon cette configuration, grâce à l'échange de calories s'opérant entre le gaz à **l'état** liquide circulant dans le premier circuit d'alimentation et le gaz à l'état vapeur circulant dans la ligne de retour, la température du gaz à l'état vapeur diminue en traversant les deux échangeurs de chaleur, jusqu'à ce que ledit gaz se condense et repasse à l'état liquide sensiblement en aval du premier échangeur de chaleur. Le gaz ainsi condensé, c'est-à-dire à l'état liquide, circule alors jusqu'à la cuve.

La ligne de retour comprend un organe de régulation de débit disposé en aval du premier échangeur de chaleur. L'organe de régulation de débit est apte à s'ouvrir ou se fermer de manière partielle ou totale, et ce afin de contrôler le débit du gaz circulant dans la ligne de retour. Le débit est contrôlé de sorte à ce qu'un maximum de gaz à l'état vapeur soit recondensé. Il est toutefois limité afin d'éviter une évaporation du gaz à l'état liquide circulant dans le premier circuit d'alimentation lors de l'échange de chaleur se déroulant dans le premier échangeur de chaleur, ce qui génèrerait une cavitation de la pompe.

Le dispositif de gestion du système d'alimentation permet de contrôler l'organe de régulation de débit en fonction notamment des mesures effectuées par les différents capteurs et détecteurs au sein dudit système d'alimentation et à différents endroits de celui-ci. Par définition, les capteurs sont configurés pour déterminer la température du gaz tandis que les détecteurs sont configurés pour déterminer la pression du gaz.

Le premier capteur est positionné de sorte à déterminer ou mesurer la température du gaz dans le premier circuit d'alimentation en sortie du premier échangeur de chaleur. Le contrôle de cette température participe à déterminer si le gaz en sortie du premier échangeur de chaleur est maintenu à l'état liquide, l'échange de chaleur se produisant au sein du premier échangeur de chaleur augmentant la température de gaz circulant dans le premier circuit d'alimentation. La détermination de la température se fait par ailleurs en amont de la pompe, par exemple en plongeant le premier capteur dans le gaz en un endroit situé entre la sortie du premier échangeur de chaleur et l'entrée de la pompe.

Le premier détecteur détermine la pression du gaz également circulant au sein du premier circuit d'alimentation entre le premier échangeur de chaleur et la pompe. La détermination de la pression est également importante car la température d'évaporation du gaz varie en fonction de sa pression.

Le deuxième capteur est également positionné de sorte à déterminer la température du gaz circulant dans le premier circuit d'alimentation, mais en amont du premier échangeur de chaleur, contrairement au premier capteur. Le troisième capteur est quant à lui positionné de sorte à déterminer la température du gaz sur la ligne de retour, en aval du premier échangeur de chaleur et en amont de l'organe de régulation de débit.

Toutes les données des capteurs et du détecteur sont transmises au module de commande. En fonction des données reçues, le module de commande est apte à contrôler l'organe de régulation de sorte à maximiser la quantité de gaz condensé circulant dans la ligne de retour, mais sans entraîner d'évaporation du gaz à l'état liquide circulant dans le premier circuit d'alimentation et traversant le premier échangeur de chaleur.

Selon une caractéristique de l'invention, le système d'alimentation comprend un analyseur de fluide configuré pour déterminer la composition du gaz à l'état liquide contenu dans la cuve. Plusieurs types de gaz à l'état liquide peuvent être transportés et/ou stockés au sein de la cuve évoquée précédemment. Tous ces gaz présentent une température d'évaporation différente en fonction de leur composition respective, par exemple en fonction des différents types et proportions d'hydrocarbures composant le gaz et de l'évolution au cours du transport de la cargaison. Il est donc important de connaître la composition de la cargaison de gaz et donc sa température d'évaporation afin de contrôler le système d'alimentation objet de l'invention de manière optimale.

L'analyseur de fluide peut être apte à déterminer la composition du gaz lorsque ce dernier est à l'état liquide. Le gaz à l'état liquide peut également être vaporisé de manière forcée afin que l'analyseur de fluide puisse déterminer la composition du gaz.

Selon une caractéristique de l'invention, le dispositif de gestion comprend un deuxième détecteur configuré pour déterminer une pression du gaz présent dans la cuve, le module de commande étant configuré pour contrôler l'organe de régulation de débit en fonction de la pression du gaz déterminée par le deuxième détecteur. Ce deuxième détecteur détermine la pression du gaz circulant dans le deuxième circuit d'alimentation, cette pression étant identique à la pression du gaz dans le ciel de cuve. Autrement dit, le deuxième détecteur participe à une surveillance de la pression interne de la cuve. Une telle surveillance est importante afin d'éviter une pression trop faible au sein de la cuve, qui peut entraîner des déformations des membranes de la cuve et endommager celles-ci.

Selon une caractéristique de l'invention, la ligne de retour comprend un débitmètre configuré pour déterminer le débit de gaz à l'état vapeur circulant dans la ligne de retour, le module de commande étant configuré pour contrôler l'organe de régulation de débit en fonction du débit de gaz déterminé par le débitmètre. Le débitmètre peut être contrôlé par un opérateur afin de limiter le débit de gaz circulant dans la ligne de retour. L'organe de régulation de débit est dans ce cas contrôlé par l'opérateur par le biais du débitmètre et du module de commande, ce dernier assurant la liaison entre le débitmètre et l'organe de régulation de débit.

Selon une caractéristique de l'invention, le premier circuit d'alimentation comprend au moins un organe de pompage configuré pour pomper le gaz prélevé à l'état liquide dans la cuve. La pompe, autrement appelée organe de pompage, est installée en fond de cuve et assure le pompage du gaz à l'état liquide afin que celui-ci puisse circuler dans le premier circuit d'alimentation. L'organe de pompage est avantageusement une pompe immergée agencée au fond de la cuve afin de prélever le gaz à l'état liquide pour le faire circuler au sein du premier circuit d'alimentation. Lorsque le gaz à l'état liquide est pompé par la pompe immergée, la pression de celui-ci est élevée entre 6 et 17 bars absolus.

L'invention couvre également un procédé de contrôle d'un système d'alimentation tel que décrit précédemment, comprenant :
- une étape de comparaison entre la température du gaz présent dans le premier circuit d'alimentation entre le premier échangeur de chaleur et la pompe, et un seuil maximal de température déterminé en fonction de la pression du gaz présent dans le premier circuit d'alimentation entre le premier échangeur de chaleur et la pompe, d'une composition du gaz circulant dans le système d'alimentation et d'une marge de sécurité,
- si la température du gaz présent dans le premier circuit d'alimentation entre le premier échangeur de chaleur et la pompe est supérieure au seuil maximal de température, on réduit une section de passage de l'organe de régulation de débit,
- si la température du gaz présent dans le premier circuit d'alimentation entre le premier échangeur de chaleur et la pompe est inférieure au seuil maximal de température, on met en œuvre une étape comparative entre la température du gaz présent dans la ligne de retour entre le premier échangeur de chaleur et l'organe de régulation de débit et un seuil de température optimal déterminé en fonction de la température du gaz présent dans le premier circuit d'alimentation entre la cuve et le premier échangeur de chaleur et d'un écart de température,
- si la température du gaz présent dans la ligne de retour entre le premier échangeur de chaleur et l'organe de régulation de débit est supérieure au seuil optimal de température, on réduit la section de passage de l'organe de régulation de débit,
- si la température du gaz présent dans la ligne de retour entre le premier échangeur de chaleur et l'organe de régulation de débit est inférieure au seuil optimal de température, on augmente la section de passage de l'organe de régulation de débit.

C'est grâce à ce procédé de contrôle que la régulation du système d'alimentation est réalisée afin d'optimiser la condensation du gaz à l'état vapeur sans nuire au bon fonctionnement de la pompe.

L'étape de comparaison permet de s'assurer que la température du gaz circulant dans le premier circuit d'alimentation n'est pas trop élevée en sortie du premier échangeur de chaleur. Pour ce faire, la température dudit gaz est déterminée par le premier capteur. A ce stade, la température du gaz à la sortie du premier échangeur de chaleur est alors connue.

De manière simultanée ou successive, le seuil maximal de température est déterminé. L'objectif est de maintenir la température du gaz relevée par le premier capteur inférieure à ce seuil maximal de température. Ce dernier est calculé à partir de la pression du gaz déterminée par le premier détecteur et de la composition du gaz, qui est connue d'une manière ou d'une autre. La marge de sécurité est alors retranchée au résultat obtenu. Cette marge de sécurité permet de s'assurer par exemple que le gaz ne s'évapore pas même en cas de léger dépassement de ce seuil maximal de température. Une telle marge de sécurité est dépendante de la hauteur d'aspiration positive nette de la pompe et d'un seuil de sécurité déterminé. La hauteur d'aspiration positive nette est une donnée à surveiller afin d'éviter que l'aspiration du gaz à l'état liquide à l'entrée de la pompe n'entraîne une vaporisation dudit gaz à l'état liquide, pouvant créer une cavitation au sein de la pompe. La hauteur d'aspiration positive nette est dépendante du modèle de pompe utilisé. Le seuil de sécurité peut quant à lui être déterminé par un opérateur et forme un niveau de sécurité supplémentaire pour garantir l'atteinte de l'objectif.

Une fois le seuil maximal de température et la température relevée par le premier capteur obtenus, ces deux valeurs sont comparées l'une à l'autre au cours de l'étape de comparaison.

Si la température relevée par le premier capteur est supérieure au seuil maximal de température, cela signifie que le gaz circulant dans le premier circuit d'alimentation sort du premier échangeur de chaleur à une température trop élevée. Il y a alors un risque d'évaporation partielle, la partie vapeur du gaz en sortie du premier échangeur de chaleur risquant de nuire au fonctionnement de la pompe.

Une température trop élevée au niveau du premier circuit d'alimentation en sortie du premier échangeur de chaleur est synonyme d'un échange de chaleur trop important au sein du premier échangeur de chaleur. Il est possible de réduire le niveau de cet échange de chaleur en limitant le débit de gaz à l'état vapeur circulant dans la ligne de retour. Le module de commande contrôle alors l'organe de régulation de débit afin de réduire le débit de gaz à l'état vapeur circulant au sein de la ligne de retour.

Grâce à cette réduction de débit, l'échange de chaleur produit dans le premier échangeur de chaleur est moins important et le gaz circulant dans le premier circuit d'alimentation sort du premier échangeur de chaleur a une température moins élevée et en étant donc maintenu à l'état liquide.

Si la température du gaz déterminée par le premier capteur est inférieure au seuil maximal de température, alors le procédé se poursuit avec l'étape comparative. A ce stade, il est assuré que, dans les conditions du système d'alimentation à l'instant t, il n'y a aucun risque d'évaporation du gaz à l'état liquide en sortie du premier échangeur de chaleur. Il est donc envisageable de potentiellement augmenter le débit de gaz à l'état vapeur circulant dans la ligne de retour pour maximiser la quantité de gaz condensé par le système d'alimentation.

Pour ce faire, l'étape comparative consiste dans un premier temps à déterminer la température du gaz présent dans la ligne de retour entre le premier échangeur de chaleur et l'organe de régulation de débit via le troisième capteur, et, de manière simultanée ou successive, de déterminer le seuil optimal de température.

Le seuil optimal de température correspond à la température déterminée par le deuxième capteur, c'est-à-dire la température du gaz circulant au sein du premier circuit d'alimentation et mesurée entre la cuve et le premier échangeur de chaleur, de préférence à l'entrée du premier échangeur de chaleur, à laquelle on ajoute l'écart de température. L'écart de température correspond par exemple au pincement du premier échangeur de chaleur. La température du gaz déterminée par le troisième capteur est alors comparée au seuil optimal de température.

L'objectif ici est de maximiser le rendement de la condensation opérée par le système d'alimentation. Cette maximisation est possible en faisant converger la température déterminée par le troisième capteur vers le seuil optimal de température. Ainsi, si la température déterminée par le troisième capteur est inférieure au seuil optimal de température, cela signifie qu'il est possible de condenser une plus grande quantité de gaz à l'état vapeur circulant dans la ligne de retour. Le module de commande augmente alors la section de passage de l'organe de régulation de débit afin d'augmenter la quantité de gaz circulant dans la ligne de retour, jusqu'à faire converger la température du gaz déterminée par le troisième capteur avec le seuil optimal de température.

Si la température déterminée par le troisième capteur est supérieure au seuil optimal de température, cela signifie que la condensation du gaz à l'état vapeur présent dans la ligne de retour n'est pas optimale. Le module de commande diminue alors la section de passage de l'organe de régulation de débit afin de réduire la quantité de gaz circulant dans la ligne de retour, jusqu'à faire converger la température du gaz déterminée par le troisième capteur avec le seuil optimal de température. Comme le seuil optimal de température est dépendant d'une température mesurée, ce seuil varie en fonction des conditions d'utilisation du système d'alimentation.

Tel que cela a été décrit, l'étape comparative est successive à l'étape de comparaison. Il est toutefois possible que le procédé de contrôle mette en œuvre l'étape de comparaison et l'étape comparative de manière simultanée. L'ajustement potentiel de la section de passage de l'organe de régulation de débit est alors effectué en fonction de l'étape prioritaire, c'est-à-dire l'étape de comparaison ou l'étape comparative s'il a été déterminé à l'étape de comparaison que la section de passage de l'organe de régulation de débit n'a pas à être réduite.

Selon une caractéristique du procédé, celui-ci est réitérable au cours du temps. Le procédé est réitérable à partir de l'étape de comparaison si les étapes sont successives, ou à partir de l'étape de comparaison et de l'étape comparative si celles-ci sont mises en œuvre simultanément. Le procédé peut être répété une fois que le contrôle de la section de passage de l'organe de régulation suivant l'étape de comparaison ou l'étape comparative est effectué.

Selon une caractéristique du procédé, la composition du gaz peut être déterminée par l'analyseur de fluide. La détermination de la composition du gaz est disponible au moins au moment de la mise en œuvre de l'étape de comparaison du procédé de contrôle et permet de définir le seuil maximal de température. L'analyseur de fluide évoqué précédemment constitue une solution pour obtenir la composition du gaz et cette analyse peut être opérée lors du chargement de la cargaison, ou postérieurement, c'est-à-dire pendant le déplacement de l'ouvrage flottant.

Selon une caractéristique du procédé, la composition du gaz peut être déterminée grâce à une documentation technique. Il s'agit d'une solution alternative à la détermination via l'analyseur de fluide, par exemple dans le cas où le système d'alimentation ne comporte pas un tel analyseur de fluide. La documentation technique est fournie avec la cargaison et contient une pluralité de caractéristiques relatives à celle-ci, telle que la température d'évaporation du gaz de la cargaison. Cette documentation technique est par exemple un abaque reliant la température d'évaporation avec la pression spécifique du gaz objet de la cargaison.

Selon une caractéristique du procédé, le seuil maximal de température peut être déterminé grâce à un tableau de données de plusieurs types de gaz. En l'absence d'un analyseur de gaz et d'une documentation technique, il est possible de se fier à un tableau de données. Un tel tableau présente la température d'évaporation en fonction de la pression pour une majorité des types de gaz naturel transportés et/ou stockés par un navire et connus à ce jour. Ainsi, en relevant la pression déterminée par le premier détecteur, la température d'évaporation la plus basse parmi les différents types de gaz à la pression déterminée est utilisée pour fixer le seuil maximal de température, et ce en prenant également en compte la marge de sécurité. Un tel tableau de données peut être lu manuellement ou être entré dans une mémoire du dispositif de gestion pour automatiser la détermination du seuil maximal de température.

Selon une caractéristique du procédé, la marge de sécurité et l'écart de température correspondent à une valeur comprise entre 1°C et 3°C. Il s'agit de valeurs suffisantes tout en étant relativement proches des valeurs limites réelles de température, afin de ne pas nuire à l'optimisation du fonctionnement du système d'alimentation.

Selon une caractéristique du procédé, la pression du gaz déterminée par le deuxième détecteur est comparée à un seuil de pression. Cette détermination se fait de manière parallèle aux étapes précédemment décrites. Le deuxième détecteur permet de déterminer la pression du gaz circulant dans le deuxième circuit d'alimentation, et donc la pression qui règne dans le ciel de la cuve. Cette détermination permet de s'assurer que la pression interne de la cuve n'est pas trop basse. Une pression interne trop faible de la cuve peut conduire à une déformation des membranes. La pression interne de la cuve doit donc être maintenue au-dessus du seuil de pression. Le seuil de pression correspond à une valeur fixe sous laquelle il est considéré que la pression interne de la cuve peut entraîner une déformation des membranes de ladite cuve. A titre d'exemples, le seuil de pression peut être de -60mbars ou de -30mbars par rapport à la pression extérieure.

Selon une caractéristique du procédé, celui-ci comprend une étape d'interruption du débit de gaz au sein de la ligne de retour lorsque la pression du gaz déterminée par le deuxième détecteur est inférieure au seuil de pression. La circulation de gaz au sein du deuxième circuit d'alimentation et de la ligne de retour est le résultat de l'aspiration du gaz à l'état vapeur dans le ciel de la cuve, et conduit à une baisse de la pression interne de la cuve. Ainsi, lorsque la pression du ciel de cuve est inférieure au seuil de pression, la membrane de la cuve risque d'être endommagée. L'organe de commande ferme alors entièrement l'organe de régulation de débit afin de stopper la diminution de la pression.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une représentation schématique d'un système d'alimentation selon l'invention,
[fig 2] est un logigramme d'un procédé de contrôle selon l'invention, du système d'alimentation,
[fig 3] est un logigramme d'une partie du procédé de contrôle surveillant une quantité de gaz à l'état vapeur,
[fig 4] est un exemple de tableau de données de plusieurs types de gaz, utilisable pour la mise en œuvre du procédé de contrôle,
[fig 5] est une représentation schématique écorchée d'une cuve d'un ouvrage flottant et d'un terminal de chargement et/ou de déchargement de cette cuve.

Les termes « amont » et « aval » employés dans la description qui suit sont utilisés pour exprimer des positions d'éléments au sein de circuits de gaz à l'état liquide ou à l'état vapeur et se réfèrent au sens de circulation dudit gaz au sein dudit circuit.

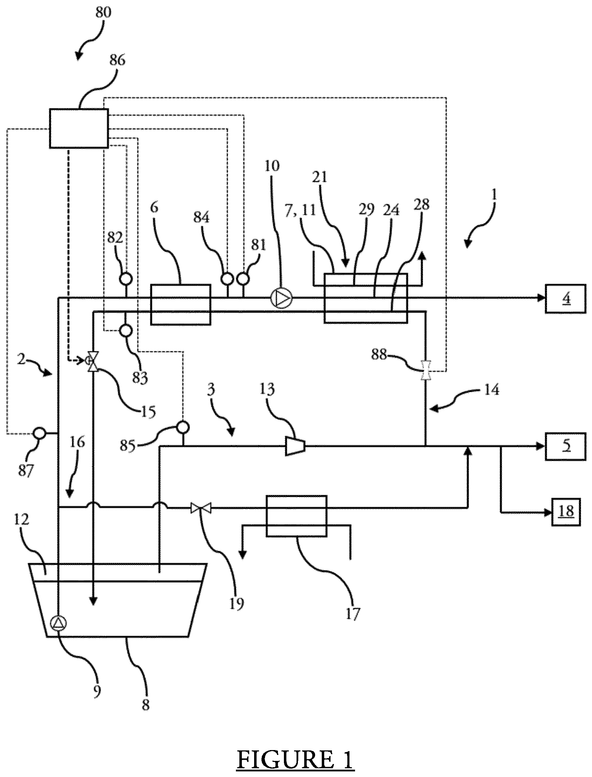

La figure 1 représente un système d'alimentation 1 en gaz disposé sur un ouvrage flottant. Le système d'alimentation 1 permet de faire circuler du gaz pouvant être à l'état liquide, à l'état vapeur, à l'état diphasique ou à l'état supercritique, et ce à partir d'une cuve 8 de stockage et/ou de transport, et jusqu'à un appareil consommateur de gaz à haute pression 4 et à un appareil consommateur de gaz à basse pression 5, afin d'alimenter ces derniers en carburant.

Ledit ouvrage flottant peut par exemple être un navire pouvant stocker et/ou transporter du gaz à l'état liquide, notamment du gaz naturel. Le système d'alimentation 1 est dans ce cas apte à utiliser le gaz à l'état liquide que l'ouvrage flottant stocke et/ou transporte pour alimenter l'appareil consommateur de gaz à haute pression 4, lequel pouvant par exemple être un moteur de propulsion, et l'appareil consommateur de gaz à basse pression 5, lequel pouvant par exemple être un générateur électrique alimentant l'ouvrage flottant en électricité.

Afin d'assurer la circulation du gaz contenu dans la cuve 8 jusqu'à l'appareil consommateur de gaz à haute pression 4, le système d'alimentation 1 est pourvu d'un premier circuit d'alimentation 2 en gaz. Le premier circuit d'alimentation 2 comprend un organe de pompage 9, avantageusement une pompe immergée 9 disposée au sein de la cuve 8. La pompe immergée 9 permet de pomper le gaz à l'état liquide et de le faire circuler notamment au sein du premier circuit d'alimentation 2. En aspirant le gaz à l'état liquide, l'organe de pompage 9 élève la pression de celui-ci à une valeur comprise entre 6 et 17 bars absolus.

Le gaz à l'état liquide, selon un sens de circulation allant de la cuve 8 vers l'appareil consommateur de gaz à haute pression 4, traverse un premier échangeur de chaleur 6 et est mis en pression par une pompe 10. Par la suite, le gaz à l'état liquide traverse un unique échangeur de chaleur 21, combinant un deuxième échangeur de chaleur 7 et un évaporateur haute pression 11. Il est toutefois possible que le deuxième échangeur de chaleur 7 et l'évaporateur haute pression 11 soient distincts l'un de l'autre. Les détails concernant les échangeurs de chaleur seront décrits par la suite.

L'unique échangeur de chaleur 21, via l'évaporateur haute pression 11, permet de modifier l'état du gaz circulant dans le premier circuit d'alimentation 2 afin de le faire passer à l'état vapeur ou supercritique. Un tel état permet au gaz d'être compatible pour alimenter l'appareil consommateur de gaz à haute pression 4. L'évaporation du gaz à l'état liquide peut par exemple se faire par échange de chaleur avec un fluide caloporteur à température suffisamment élevée pour évaporer le gaz à l'état liquide, ici de l'eau glycolée, de l'eau de mer ou de la vapeur d'eau.

La hausse de la pression du gaz est assurée par la pompe 10 lorsque celle-ci pompe le gaz à l'état liquide. La pompe 10 permet d'élever la pression du gaz à l'état liquide à une valeur comprise entre 30 et 400 bars absolus, notamment pour un usage avec de l'ammoniaque ou de l'hydrogène, entre 30 et 70 bars absolus pour un usage avec du gaz de pétrole liquéfié, et de préférence entre 150 et 400 bars absolus pour un usage avec de l'éthane, de l'éthylène ou encore avec du gaz naturel liquéfié constitué majoritairement de méthane.

Grâce à la combinaison de la pompe 10 et de l'unique échangeur de chaleur 21, le gaz est à une pression et dans un état compatible pour l'alimentation de l'appareil consommateur à haute pression 4. Une telle configuration permet d'éviter l'installation de compresseurs haute pression sur le premier circuit d'alimentation 2 qui présentent des contraintes de coûts et génèrent de fortes vibrations.

Au sein de la cuve 8, une partie de la cargaison de gaz peut naturellement passer à l'état vapeur et se diffuser dans un ciel de cuve 12. Afin d'éviter une surpression au sein de la cuve 8, le gaz à l'état vapeur contenu dans le ciel de cuve 12 doit être évacué.

Le système d'alimentation 1 comprend donc un deuxième circuit d'alimentation 3 en gaz, qui utilise le gaz à l'état vapeur pour alimenter l'appareil consommateur de gaz à basse pression 5. Le deuxième circuit d'alimentation 3 s'étend entre le ciel de cuve 12 et l'appareil consommateur de gaz à basse pression 5. Afin d'aspirer le gaz à l'état vapeur contenu dans le ciel de cuve 12, le deuxième circuit d'alimentation 3 comprend un compresseur 13. En plus d'aspirer le gaz à l'état vapeur, le compresseur 13 permet également de comprimer le gaz à **l'état** vapeur circulant dans le deuxième circuit d'alimentation 3 à une pression comprise entre 6 et 20 bars absolus, et ce afin que le gaz à l'état vapeur soit à une pression compatible pour l'alimentation de l'appareil consommateur de gaz à basse pression 5. Le deuxième circuit d'alimentation 3 permet ainsi d'alimenter l'appareil consommateur de gaz à basse pression 5, et ce tout en régulant la pression au sein de la cuve 8 en aspirant le gaz à l'état vapeur présent dans le ciel de cuve 12.

La présence du gaz à l'état vapeur en quantité excessive au sein du ciel de cuve 12 entraîne une surpression au sein de la cuve 8. Il est donc nécessaire d'évacuer le gaz à l'état vapeur dans le but d'abaisser la pression au sein de la cuve 8. Le gaz à l'état vapeur en excès peut alors par exemple être éliminé par un brûleur 18 ou, de façon non illustrée, rejeté dans l'atmosphère et ainsi engendrer une perte de cargaison. Toutefois, le système d'alimentation 1 selon l'invention comprend une ligne de retour 14 qui s'étend du deuxième circuit d'alimentation 3 jusqu'à la cuve 8.

La ligne de retour 14 est raccordée sur le deuxième circuit d'alimentation 3 en aval du compresseur 13 par rapport à un sens de circulation du gaz à l'état vapeur circulant dans le deuxième circuit d'alimentation 3. La ligne de retour 14 traverse dans un premier temps l'unique échangeur de chaleur 21. A ce titre, l'unique échangeur de chaleur 21 comprend donc une première passe 24 au sein de laquelle circule le gaz à l'état liquide du premier circuit d'alimentation 2, une deuxième passe 28 au sein de laquelle circule le gaz à l'état vapeur de la ligne de retour 14 et une troisième passe 29 au sein de laquelle circule le fluide caloporteur évaporant le gaz à l'état liquide circulant dans la première passe 24.

En sortie de la deuxième passe 28 de l'unique échangeur de chaleur 21, le gaz à l'état vapeur circule jusqu'à traverser le premier échangeur de chaleur 6. C'est à l'entrée du premier échangeur de chaleur 6 que le gaz à l'état liquide du premier circuit d'alimentation 2 présente la température la plus basse. De ce fait, c'est donc après avoir traversé le premier échangeur de chaleur 6 que le gaz circulant dans la ligne de retour 14 est condensé. Le gaz de la ligne de retour 14 est donc à l'état vapeur à l'entrée du premier échangeur de chaleur 6 et sort à **l'état** liquide suite à l'échange de calories se déroulant au sein du premier échangeur de chaleur 6.

La ligne de retour 14 comprend par ailleurs un organe de régulation de débit 15 qui contrôle le débit du fluide circulant dans la ligne de retour 14. Cet organe de régulation de débit 15 présente une section de passage pouvant être modifiée. Une fois que le gaz est condensé, celui-ci circule jusqu'à la cuve 8. Le premier échangeur de chaleur 6 fait donc office de condenseur tandis que l'organe de régulation de débit 15 contrôle l'échange thermique ayant lieu dans le premier échangeur de chaleur 6 et dans l'unique échangeur de chaleur 21.

Le système d'alimentation 1 comprend également une ligne d'alimentation auxiliaire 16, s'étendant du premier circuit d'alimentation 2, par un piquage disposé entre l'organe de pompage 9 et le premier échangeur de chaleur 6, jusqu'au deuxième circuit d'alimentation 3, en se raccordant à celui-ci entre le compresseur 13 et l'appareil consommateur de gaz à basse pression 5. La ligne d'alimentation auxiliaire 16 permet d'alimenter l'appareil consommateur de gaz à basse pression 5 en cas de débit insuffisant de gaz à l'état vapeur formé au sein du ciel de cuve 12.

Lorsque le gaz à l'état vapeur n'est pas présent en quantité suffisante dans le ciel de cuve 12, le gaz à l'état liquide pompé par la pompe immergée 9 peut alors circuler au sein de cette ligne d'alimentation auxiliaire 16 afin d'alimenter l'appareil consommateur de gaz à basse pression 5. Pour ce faire, la ligne d'alimentation auxiliaire 16 traverse un évaporateur basse pression 17 afin que le gaz à l'état liquide circulant dans la ligne d'alimentation auxiliaire 16 passe à l'état de vapeur. Le fonctionnement de l'évaporateur basse pression 17 peut par exemple être identique à celui de l'évaporateur haute pression 11, c'est-à-dire que le gaz est évaporé par échange de chaleur avec un fluide caloporteur à température suffisamment élevée pour évaporer le gaz à l'état liquide. En sortie de l'évaporateur basse pression 17, le gaz à l'état vapeur circule au sein de la ligne d'alimentation auxiliaire 16, puis rejoint le deuxième circuit d'alimentation 3 afin d'alimenter l'appareil consommateur de gaz à basse pression 5.

On comprend de ce qui précède que la ligne d'alimentation auxiliaire 16 n'est utilisée qu'en l'absence de gaz à l'état vapeur en quantité suffisante au sein du ciel de cuve 12. Ainsi, la ligne d'alimentation auxiliaire 16 comprend une vanne 19 contrôlant la circulation de gaz au sein de la ligne d'alimentation auxiliaire 16 lorsque l'utilisation de celle-ci n'est pas nécessaire.

La pompe 10 est avantageusement disposée entre le premier échangeur de chaleur 6 et l'unique échangeur de chaleur 21. La pompe 10 n'est apte à pomper que le gaz à l'état liquide. Afin de ne pas nuire à son bon fonctionnement, il est important que le gaz circulant dans le premier circuit d'alimentation 2 soit maintenu à l'état liquide en sorti du premier échangeur de chaleur 6.

Par ailleurs, l'un des objectifs du système d'alimentation 1 selon l'invention est de recondenser un maximum de gaz à l'état vapeur formé dans le ciel de cuve 12 et non consommé par l'appareil consommateur de gaz à basse pression 5, mais sans entraîner l'évaporation du gaz circulant dans le premier circuit d'alimentation 2 lors de la traversée du premier échangeur de chaleur 6.

Pour ce faire, le système d'alimentation 1 comprend un dispositif de gestion 80 assurant le contrôle des différents paramètres suscités. Le dispositif de gestion 80 comprend notamment un premier capteur 81, un deuxième capteur 82, un troisième capteur 83, un premier détecteur 84 et un deuxième détecteur 85. On considèrera par la suite que les capteurs 81, 82, 83 déterminent une température du gaz, tandis que les détecteurs 84, 85 déterminent une pression du gaz. Le dispositif de gestion 80 comprend également un module de commande 86 recevant les différentes données déterminées par les capteurs 81, 82, 83 ainsi que par les détecteurs 84, 85. En réponse à ces dites données, le module de commande 86 peut agir sur l'organe de régulation de débit 15 afin de faire varier le débit de gaz circulant dans la ligne de retour 14.

Le premier capteur 81 est positionné au niveau du premier circuit d'alimentation 2 entre le premier échangeur de chaleur 6 et la pompe 10. Le deuxième capteur 82 est positionné au niveau du premier circuit d'alimentation 2 entre la cuve 8 et le premier échangeur de chaleur 6. Le troisième capteur 83 est positionné au niveau de la ligne de retour 14 entre le premier échangeur de chaleur 6 et l'organe de régulation de débit 15. Chacun des capteurs 81, 82, 83 est configuré pour déterminer la température du gaz circulant au niveau de chaque positionnement respectif desdits capteurs 81, 82, 83. La température du gaz circulant dans ces différentes sections du système d'alimentation 1 est utilisée pour contrôler l'organe de régulation de débit 15. Il en va de même pour les pressions déterminées par le premier détecteur 84, positionné au niveau du premier circuit d'alimentation 2 entre le premier échangeur de chaleur 6 et la pompe 10, et pour le deuxième détecteur 85, positionné au niveau du deuxième circuit d'alimentation 3 entre la cuve 8 et le compresseur 13.

Le dispositif de gestion 80 peut également comprendre un analyseur de fluide 87 apte à déterminer la composition du gaz à l'état liquide contenu dans la cuve 8. L'analyseur de fluide 87 peut déterminer la composition du gaz directement à l'état liquide ou peut nécessiter de vaporiser le gaz afin d'en déterminer la composition. La connaissance de la composition du gaz est intéressante pour déterminer une température d'évaporation du gaz tel que cela sera décrit en détails par la suite. Tout comme les valeurs de température et de pression, la composition du gaz déterminée par l'analyseur de fluide 87 est également transmise au module de commande 86. La composition du gaz peut toutefois être également donnée via une documentation technique relative à la cargaison de gaz ou correspondre à un type de gaz dont les caractéristiques sont mentionnées au sein d'un tableau de données, tel que cela sera illustré par la suite.

La ligne de retour 14 peut par ailleurs comprendre un débitmètre 88. Le débitmètre est configuré pour déterminer le débit de gaz circulant dans la ligne de retour 14. D'une manière avantageuse, le débit de gaz est déterminé entre la connexion avec le deuxième circuit d'alimentation 3 et l'unique échangeur de chaleur 21. Le débitmètre 88 est également relié au module de commande 86 qui peut agir sur l'organe de régulation de débit 15. Un opérateur peut à ce titre agir sur le débitmètre 88 afin que l'organe de commande 86 reçoive l'information provenant du débitmètre 88 et agisse sur l'organe de régulation de débit 15 en réponse à cette information du débitmètre 88.

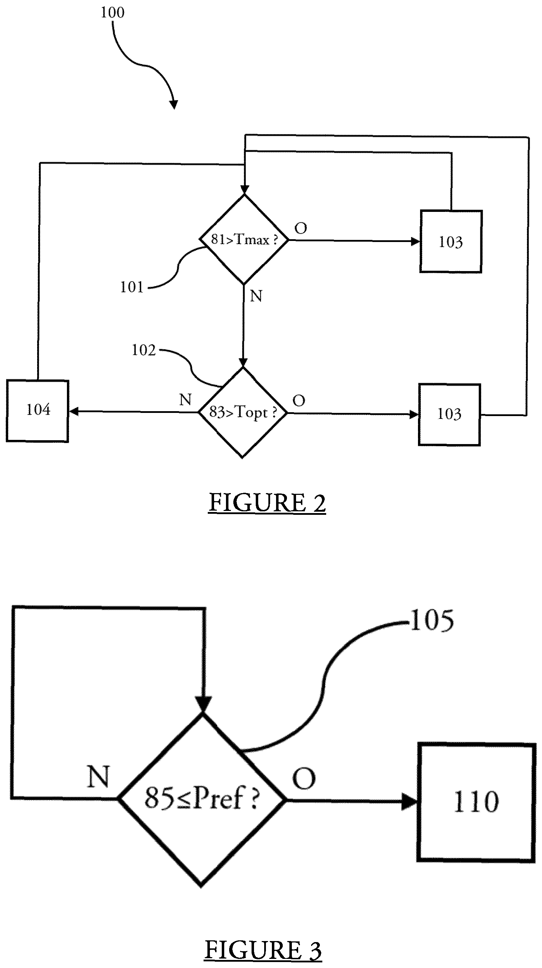

La figure 2 est un logigramme permettant de décrire les différentes étapes d'un procédé de contrôle 100 selon l'invention, par exemple lorsqu'il est mis en œuvre par le dispositif de gestion décrit précédemment.

Le procédé de contrôle 100 débute par une étape de comparaison 101 entre la température du gaz par le premier capteur 81 et un seuil maximal de température Tmax. La température du gaz déterminée par le premier capteur 81 correspond à la température du gaz circulant dans le premier circuit d'alimentation en sortie du premier échangeur de chaleur. Il peut notamment s'agir d'une mesure *in situ,* en positionnant le premier capteur 81 en tout endroit situé entre une sortie de la passe du premier échangeur de chaleur faisant partie du premier circuit d'alimentation et une entrée de la pompe, tel qu'illustré en figure 1. Il peut également s'agir d'une estimation ou d'un calcul réalisé à partir d'autres données du système.

Préalablement, simultanément ou successivement à la détermination de la température du gaz par la premier capteur 81, le seuil maximal de température Tmax est défini à partir de la pression du gaz déterminée par le premier détecteur, de la composition du gaz, et d'une marge de sécurité. La pression du gaz utilisée lors de la détermination du seuil maximal de température Tmax correspond à la pression du gaz circulant dans le premier circuit d'alimentation, en sortie du premier échangeur de chaleur.

Tout comme pour le premier capteur 81, le premier détecteur peut mesurer la pression *in situ* ou résulter d'une estimation ou d'un calcul réalisé à partir d'autres données du système.

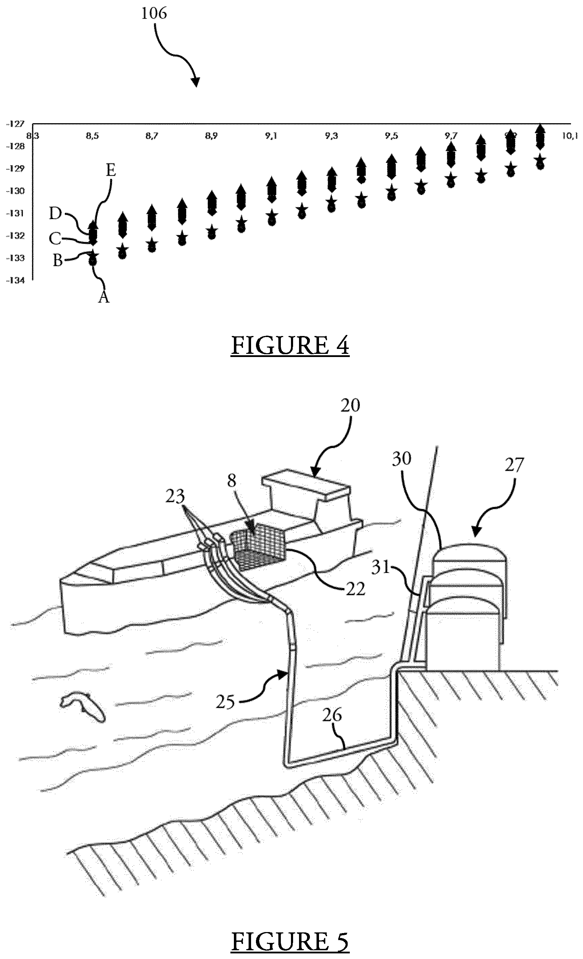

Il est possible de trouver la température d'évaporation du gaz si l'on connait sa pression et sa composition. La pression est déterminée par le premier détecteur 84, tandis que la composition du gaz peut être obtenue grâce à l'analyseur de fluide 87 illustré en figure 1. Si le système d'alimentation n'inclut pas d'analyseur de fluide, la composition du gaz peut être donnée par la documentation technique de la cargaison, notamment communiquée au moment du chargement de la cargaison. Si ni l'un ni l'autre ne sont disponibles, le seuil maximal de température Tmax peut être déterminé à l'aide d'un tableau de données, illustré en figure 4, regroupant les différents types de gaz et présentant les différentes températures d'évaporation en fonction de la pression de chacun des gaz. La pression déterminée par le premier détecteur 84 étant connue, le tableau de données est donc lu à partir de cette pression en choisissant la température d'évaporation la plus faible afin de s'assurer que, peu importe le type de gaz contenu dans la cuve, celui-ci présente au minimum cette température sélectionnée comme température d'évaporation.

Le seuil maximal de température Tmax est finalement obtenu en retranchant la marge de sécurité à la température d'évaporation du gaz obtenue précédemment. La marge de sécurité dépend de la hauteur d'aspiration positive nette de la pompe et d'un seuil de sécurité. La hauteur d'aspiration positive nette est propre à la pompe utilisée au sein du premier circuit d'alimentation et correspond à une limite à partir de laquelle la pompe risque d'évaporer le gaz à l'état liquide en le pompant. Le seuil de sécurité peut quant à lui être sélectionné par l'opérateur. La marge de sécurité peut par exemple être comprise entre 1°C et 3°C afin d'obtenir un seuil maximal de température Tmax légèrement inférieur à la température d'évaporation réelle du gaz.

Une fois le seuil maximal de température obtenu, la comparaison entre ce dernier et la température du gaz déterminée par le premier capteur 81 peut être mise en œuvre.

Si la température du gaz déterminée par le premier capteur 81 est supérieure au seuil maximal de température, cela signifie que le gaz circulant dans le premier circuit d'alimentation sort du premier échangeur de chaleur à une température trop élevée, risquant ainsi de s'évaporer au moins partiellement et d'endommager la pompe par la suite.

Une température du gaz trop élevée entre le premier échangeur de chaleur et la pompe signifie que l'échange de chaleur se produisant au sein du premier échangeur de chaleur est trop important. Pour réduire cet échange de chaleur, il faut donc diminuer le débit de gaz circulant dans la ligne de retour.

Ainsi, lorsque la température du gaz déterminée par le premier capteur 81 est supérieure au seuil maximal de température, le procédé de contrôle 100 se poursuit avec une étape de réduction 103 de la section de passage. Au cours de cette étape de réduction 103, le module de commande décrit en figure 1 agît sur l'organe de régulation de débit 15, et diminue sa section de passage afin de réduire le débit de gaz circulant dans la ligne de retour, limitant ainsi l'échange de chaleur au sein du premier échangeur de chaleur et donc la hausse de température du gaz circulant dans le premier circuit d'alimentation. On évite ainsi l'évaporation du gaz en amont de la pompe.

Une fois l'étape de réduction 103 achevée, le procédé de contrôle 100 peut être réitéré à partir de l'étape de comparaison 101, par exemple afin de vérifier que la température du gaz circulant entre le premier échangeur de chaleur et la pompe a bien diminué.

Si la température du gaz déterminée par le premier capteur 81 est inférieure au seuil maximal de température Tmax, le procédé de contrôle 100 se poursuit avec une étape comparative 102.

L'étape comparative 102 est faite entre la température du gaz par le troisième capteur 83, c'est-à-dire du gaz circulant dans la ligne de retour, après avoir traversé le premier échangeur de chaleur, et un seuil optimal de température Topt, correspondant à la température du gaz déterminée par le deuxième capteur, c'est-à-dire du gaz circulant dans le premier circuit d'alimentation, en amont du premier échangeur de chaleur, auquel il est ajouté un écart de température. Ce dernier, tout comme pour la marge de sécurité, peut être compris entre +1°C et +3°C. Cet écart de température est la différence minimale entre la température du gaz à l'état liquide provenant de la cuve et qui entre dans le premier échangeur de chaleur 6, par exemple mesurée par le deuxième capteur 82, et la température du gaz circulant dans la ligne de retour 14 mesurée en sortie du premier échangeur de chaleur 6, par exemple mesurée par le troisième capteur 83. Cet écart de température peut correspondre au pincement du premier échangeur de chaleur 6.

Le deuxième capteur et le troisième capteur 83 peuvent mesurer la température *in situ,* c'est-à-dire aux positions décrites précédemment, ou résulter d'une estimation ou d'un calcul réalisé à partir d'autres données du système.

L'étape comparative 102 permet d'optimiser la condensation du gaz circulant dans la ligne de retour. L'objectif est de faire converger la valeur de la température du gaz circulant dans la ligne de retour en sortie du premier échangeur de chaleur vers le seuil optimal de température Topt afin d'opérer une condensation optimale et en quantité maximale. Si le gaz circulant dans la ligne de retour sort du premier échangeur de chaleur a une température trop élevée, cela signifie que le gaz circule en trop grande quantité pour être condensé efficacement. A l'inverse, si le gaz circulant dans la ligne de retour sort du premier échangeur de chaleur a une température trop faible, cela signifie que le débit de gaz peut être augmenté afin de condenser une plus grande quantité de gaz en un temps donné.

La température du gaz déterminée par le troisième capteur 83 est donc comparée au seuil optimal de température Topt. Que la température du gaz déterminée par le troisième capteur 83 soit supérieure ou inférieure au seuil optimal de température Topt, le procédé de contrôle 100 se poursuit avec une étape où le module de commande ajuste la section de passage de l'organe de régulation de débit. Plus précisément, le procédé de contrôle 100 se poursuit avec l'étape de réduction 103 de la section de passage de l'organe de régulation de débit si la température du gaz déterminée par le troisième capteur 83 est supérieure au seuil optimal de température Topt. Cette étape de réduction 103 est similaire à celle pouvant résulter de l'étape de comparaison 101. A l'inverse, le procédé de contrôle 100 se poursuit avec une étape d'augmentation 104 de la section de passage de l'organe de régulation de débit si la température du gaz déterminée par le troisième capteur 83 est inférieure au seuil optimal de température Topt.

Il est à noter que sur la figure 2, l'étape de comparaison 101 et l'étape comparative 102 sont effectuées l'une après l'autre, l'étape de comparaison 101 étant effectuée en premier. Le procédé de contrôle 100 peut toutefois être paramétré de sorte à mettre en œuvre l'étape de comparaison 101 et l'étape comparative 102 simultanément, l'étape de comparaison 101 étant néanmoins prioritaire sur l'étape comparative 102.

Une fois l'étape de réduction 103 ou l'étape d'augmentation 104 effectuée en fonction de l'étape de comparaison 101 ou de l'étape comparative 102, le procédé de contrôle 100 peut être réitéré à partir de l'étape de comparaison 101 si les étapes sont successives, ou à partir des deux étapes simultanées tel que cela a été décrit précédemment. La priorité est de s'assurer que le gaz à l'état liquide circulant dans le premier circuit d'alimentation ne sorte pas au moins partiellement évaporé. L'étape de comparaison 101 est donc prioritaire sur l'opération d'optimisation de condensation du gaz à l'état vapeur circulant dans la ligne de retour, correspondant à l'étape comparative 102.

La figure 3 est un logigramme d'une partie du procédé de contrôle surveillant une pression interne du ciel de cuve. Cette partie du procédé de contrôle se déroule en parallèle à ce qui a été décrit en figure 2, et consiste notamment en une étape de surveillance 105 où la pression déterminée du ciel de cuve est comparée à un seuil de pression Pref. Le seuil de pression Pref peut par exemple correspondre à une valeur de - 30mbars ou de -60mbars par rapport à la pression extérieure. C'est le deuxième détecteur 85 qui détermine, par exemple, la pression du gaz circulant dans le deuxième circuit d'alimentation entre la cuve et le compresseur, et d'une manière générale la pression interne du ciel de cuve.

Cette pression déterminée par le deuxième détecteur 85 est ensuite comparée au seuil de pression Pref. Ce dernier est fixe et correspond à une valeur de pression en dessous de laquelle il existe un risque d'endommagement des parois de la cuve.

Ainsi, si la pression déterminée par le deuxième détecteur 85 est inférieure ou égale au seuil de pression Pref, cela signifie qu'il y a un risque d'endommagement des parois de la cuve si la pression du ciel de cuve diminue davantage. Une étape d'interruption 110 est mise en œuvre, où le module de commande ferme entièrement l'organe de régulation de débit. Dans une telle situation, le système d'alimentation peut être mis hors fonctionnement en attendant que la pression dans le ciel de cuve augmente. Alternativement, l'appareil consommateur de gaz à basse pression peut être alimenté grâce à la ligne d'alimentation auxiliaire 16 présentée en figure 1.

Si la pression déterminée par le deuxième détecteur 85 est supérieure au seuil de pression, le procédé de contrôle peut se poursuivre tout en continuant de surveiller la valeur de la pression déterminée par le deuxième détecteur 85.

La figure 4 représente le tableau de données 106 évoqué précédemment, et permettant de déterminer le seuil maximal de température Tmax évoqué en figure 2. Ce tableau de données 106 représente la température d'évaporation en fonction de la pression déterminée par le premier détecteur pour cinq différents types de gaz A, B, C, D et E.

Ainsi, si la composition du gaz contenu dans la cuve ne peut pas être connue, le tableau de données 106 est utilisé pour déterminer une température d'évaporation théorique en fonction de la pression déterminée par le premier détecteur. Afin de s'assurer du maintien du gaz contenu dans la cuve à l'état liquide au sein du premier circuit d'alimentation en sortie du premier échangeur de chaleur, et ce peu importe la composition dudit gaz, la température d'évaporation choisie est la plus faible possible. Sur la figure 4, il s'agit donc du premier type de gaz A qui est choisi. Une fois l'application de la marge de sécurité, le seuil maximal de température est alors déterminé.

La figure 5 est une vue écorchée d'un ouvrage flottant 20 qui montre la cuve 8 qui contient le gaz à l'état liquide et à l'état vapeur, cette cuve 8 étant de forme générale prismatique montée dans une double coque 22 de l'ouvrage flottant 20. La paroi de la cuve 8 comporte une membrane d'étanchéité primaire destinée à être en contact avec le gaz à l'état liquide contenu dans la cuve 8, une membrane d'étanchéité secondaire agencée entre la membrane d'étanchéité primaire et la double coque 22 de l'ouvrage flottant 20, et deux barrières thermiquement isolantes agencées respectivement entre la membrane d'étanchéité primaire et la membrane d'étanchéité secondaire et entre la membrane d'étanchéité secondaire et la double coque 22.

Des canalisations 23 de chargement et/ou de déchargement de gaz à l'état liquide disposées sur le pont supérieur de l'ouvrage flottant 20 peuvent être raccordées, au moyen de connecteurs appropriées, à un terminal maritime ou portuaire pour transférer la cargaison de gaz à l'état liquide depuis ou vers la cuve 8.

La figure 5 représente également un exemple de terminal maritime ou portuaire comportant un équipement de chargement et/ou de déchargement 25, une conduite sous-marine 26 et une installation à terre et/ou portuaire 27. L'installation à terre et/ou portuaire 27 peut par exemple être agencée sur le quai d'un port, ou selon un autre exemple être agencée sur une plate-forme gravitaire en béton. L'installation à terre et/ou portuaire 27 comporte des cuves de stockage de gaz à l'état liquide 30 et des conduites de liaison 31 reliées par la conduite sous-marine 26 à l'équipement de chargement et/ou de déchargement 25.

Pour engendrer la pression nécessaire au transfert du gaz à l'état liquide, on met en œuvre des pompes équipant l'installation à terre et/ou portuaire 27 et/ou des pompes équipant l'ouvrage flottant 20.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un système d'alimentation en gaz comprenant un dispositif de gestion assurant le contrôle de la température et la condensation dudit gaz. Des variantes non décrites ici pourraient être mises en œuvre sans sortir du contexte de l'invention, dès lors que, conformément à l'invention, elles comprennent un système d'alimentation conforme à l'invention.

## Revendications

1. Système d'alimentation (1) en gaz d'au moins un appareil consommateur de gaz à haute pression (4) et d'au moins un appareil consommateur de gaz à basse pression (5) d'un ouvrage flottant (20) comprenant au moins une cuve (8) configurée pour contenir le gaz, le système d'alimentation (1) comprenant :
- au moins un premier circuit d'alimentation (2) configuré pour alimenter en gaz l'appareil consommateur de gaz à haute pression (4), comprenant au moins un organe de pompage (9) configuré pour pomper le gaz prélevé à l'état liquide dans la cuve (8),
- au moins un évaporateur haute pression (11) configuré pour évaporer le gaz circulant dans le premier circuit d'alimentation (2) en gaz,
- au moins un deuxième circuit d'alimentation (3) configuré pour alimenter en gaz l'appareil consommateur de gaz à basse pression (5), comprenant au moins un compresseur (13) configuré pour comprimer du gaz prélevé à l'état vapeur dans la cuve (8) jusqu'à une pression compatible avec les besoins de l'appareil consommateur de gaz à basse pression (5),
- au moins une ligne de retour (14) de gaz connectée au deuxième circuit d'alimentation (3) en aval du compresseur (13) et s'étendant jusqu'à la cuve (8),
- au moins un premier échangeur de chaleur (6) et un deuxième échangeur de chaleur (7), chacun configurés pour opérer un échange de chaleur entre le gaz circulant dans la ligne de retour (14) à l'état vapeur et le gaz à l'état liquide circulant dans le premier circuit d'alimentation (2), - la ligne de retour (14) comprenant un organe de régulation de débit (15) disposé entre le premier échangeur de chaleur et la cuve,
- un dit troisième capteur (83) configuré pour déterminer une température du gaz présent dans la ligne de retour entre le premier échangeur de chaleur et l'organe de régulation de débit, **caractérisé en ce que**
- le premier circuit d'alimentation comprend une pompe interposée entre le premier échangeur de chaleur et le deuxième échangeur de chaleur, et
**en ce que** le système d'alimentation (1) comprend un dispositif de gestion (80) dudit système d'alimentation (1) qui comprend au moins un premier capteur (81) et un premier détecteur (84) respectivement configurés pour déterminer une température et une pression du gaz présent dans le premier circuit d'alimentation (2) entre le premier échangeur de chaleur (6) et la pompe (10), un deuxième capteur (82) configuré pour déterminer une température du gaz présent dans le premier circuit d'alimentation (2) entre la cuve (8) et le premier échangeur de chaleur (6), le dispositif de gestion (80) comprenant un module de commande (86) configuré pour contrôler l'organe de régulation de débit (15) en fonction des caractéristiques du gaz déterminées par le premier capteur (81), le deuxième capteur (82), le troisième capteur (83) et le premier détecteur (84).

2. Système d'alimentation (1) selon la revendication 1, comprenant un analyseur de fluide (87) configuré pour déterminer la composition du gaz à l'état liquide contenu dans la cuve (8).

3. Système d'alimentation (1) selon la revendication 1 ou 2, dans lequel le dispositif de gestion (80) comprend un deuxième détecteur (85) configuré pour déterminer une pression du gaz présent dans la cuve (8), le module de commande (86) étant configuré pour contrôler l'organe de régulation de débit (15) en fonction de la pression du gaz déterminée par le deuxième détecteur (85).

4. Système d'alimentation (1) selon l'une quelconque des revendications précédentes, dans lequel la ligne de retour (14) comprend un débitmètre (88) configuré pour déterminer le débit de gaz à l'état vapeur circulant dans la ligne de retour (14), le module de commande (86) étant configuré pour contrôler l'organe de régulation de débit (15) en fonction du débit de gaz déterminé par le débitmètre (88).

5. Procédé de contrôle (100) d'un système d'alimentation (1) selon l'une quelconques des revendications précédentes, comprenant :
- une étape de comparaison (101) entre la température du gaz présent dans le premier circuit d'alimentation (2) entre le premier échangeur de chaleur (6) et la pompe (10), et un seuil maximal de température (Tmax) déterminé en fonction de la pression du gaz présent dans le premier circuit d'alimentation (2) entre le premier échangeur de chaleur (6) et la pompe (10), d'une composition du gaz circulant dans le système d'alimentation (1) et d'une marge de sécurité,
- si la température du gaz présent dans le premier circuit d'alimentation (2) entre le premier échangeur de chaleur (6) et la pompe (10) est supérieure au seuil maximal de température (Tmax), on réduit une section de passage de l'organe de régulation de débit (15),
- si la température du gaz présent dans le premier circuit d'alimentation (2) entre le premier échangeur de chaleur (6) et la pompe (10) est inférieure au seuil maximal de température (Tmax), on met en œuvre une étape comparative (102) entre la température du gaz présent dans la ligne de retour (14) entre le premier échangeur de chaleur (6) et l'organe de régulation de débit (15) et un seuil de température optimal (Topt) déterminé en fonction de la température du gaz présent dans le premier circuit d'alimentation (2) entre la cuve (8) et le premier échangeur de chaleur (6) et d'un écart de température,
- si la température du gaz présent dans la ligne de retour (14) entre le premier échangeur de chaleur (6) et l'organe de régulation de débit (15) est supérieure au seuil optimal de température (Topt), on réduit la section de passage de l'organe de régulation de débit (15),
- si la température du gaz présent dans la ligne de retour (14) entre le premier échangeur de chaleur (6) et l'organe de régulation de débit (15) est inférieure au seuil optimal (Topt) de température, on augmente la section de passage de l'organe de régulation de débit (15).

6. Procédé de contrôle (100) selon la revendication précédente, réitérable au cours du temps.

7. Procédé de contrôle (100) selon la revendication 5 ou 6, combiné à la revendication 2, au cours duquel la composition du gaz est déterminée par l'analyseur de fluide (87).

8. Procédé de contrôle (100) selon la revendication 5 ou 6, au cours duquel la composition du gaz est déterminée grâce à une documentation technique.

9. Procédé de contrôle (100) selon la revendication 5 ou 6, au cours duquel le seuil maximal de température est déterminé grâce à un tableau de données (106) de plusieurs types de gaz.

10. Procédé de contrôle (100) selon l'une quelconque des revendications 5 à 9, au cours duquel la marge de sécurité et l'écart de température correspondent à une valeur comprise entre 1°C et 3°C.

11. Procédé de contrôle (100) selon l'une quelconque des revendications 5 à 10, combiné à la revendication 3, au cours duquel la pression du gaz déterminée par le deuxième détecteur (85) est comparée à un seuil de pression (Pref).

12. Procédé de contrôle (100) selon la revendication précédente, comprenant une étape d'interruption (110) du débit de gaz au sein de la ligne de retour (14) lorsque la pression du gaz déterminée par le deuxième détecteur (85) est inférieure au seuil de pression (Pref).

## Patentansprüche

1. System (1) zur Gasversorgung mindestens eines Hochdruck-Gasverbrauchsgeräts (4) und mindestens eines Niederdruck-Gasverbrauchsgeräts (5) einer schwimmenden Struktur (20), das mindestens einen Tank (8) umfasst, der zur Aufnahme des Gases ausgelegt ist, wobei das Versorgungssystem (1) umfasst:
- mindestens einen ersten Kreislauf (2) zur Gasversorgung des Hochdruck-Gasverbrauchsgeräts (4), der mindestens ein Pumpelement (9) umfasst, das dazu ausgelegt ist, das aus dem flüssigen Zustand im Tank (8) entnommene Gas zu pumpen,
- mindestens einen Hochdruckverdampfer (11), der dazu ausgelegt ist, das im ersten Gasversorgungskreislauf (2) zirkulierende Gas zu verdampfen,
- mindestens einen zweiten Kreislauf (3) zur Versorgung der Niederdruck-Gasverbrauchsvorrichtung (5) mit Gas, der mindestens einen Kompressor (13) umfasst, der dazu ausgelegt ist, im dampfförmigen Zustand entnommenes Gas in den Tank (8) auf einen Druck zu komprimieren, der mit den Anforderungen der Niederdruck-Gasverbrauchsvorrichtung (5) kompatibel ist,
- mindestens eine Gasrücklaufleitung (14), die stromabwärts des Kompressors (13) an den zweiten Versorgungskreislauf (3) angeschlossen ist und sich zum Tank (8) erstreckt,
- mindestens einen ersten Wärmetauscher (6) und einen zweiten Wärmetauscher (7), die jeweils so ausgelegt sind, dass sie Wärme zwischen dem in der Rücklaufleitung (14) im dampfförmigen Zustand zirkulierenden Gas und dem im ersten Versorgungskreislauf (2) im flüssigen Zustand zirkulierenden Gas austauschen, wobei die Rücklaufleitung (14) ein Strömungsregelelement (15) umfasst, das zwischen dem ersten Wärmetauscher (6) und dem Tank (8) angeordnet ist, sowie einen dritten Sensor (83), der dazu ausgelegt ist, eine Temperatur des in der Rücklaufleitung (14) zwischen dem ersten Wärmetauscher (6) und dem Durchflussregelelement (15) vorhandenen Gases zu bestimmen, **dadurch gekennzeichnet, dass** der erste Versorgungskreislauf (2) eine Pumpe (10) umfasst, die zwischen dem ersten Wärmetauscher (6) und dem zweiten Wärmetauscher (7) angeordnet ist, und dass das Versorgungssystem (1) eine Vorrichtung (80) zur Steuerung des Versorgungssystems (1) umfasst, die mindestens einen ersten Sensor (81) und einen ersten Detektor (84) umfasst, die jeweils dazu ausgelegt sind, eine Temperatur und einen Druck des in dem ersten Versorgungskreislauf (2) zwischen dem ersten Wärmetauscher (6) und der Pumpe (10) vorhandenen Gases zu bestimmen, einen zweiten Sensor (82), der so konfiguriert ist, dass er die Temperatur des Gases bestimmt, das im ersten Versorgungskreislauf (2) zwischen dem Tank (8) und dem ersten Wärmetauscher (6) vorhanden ist, wobei die Steuervorrichtung (80) ein Steuermodul (86) umfasst, das so konfiguriert ist, dass es das Durchflussregelelement (15) entsprechend den vom ersten Sensor (81) ermittelten Eigenschaften des Gases steuert, des zweiten Sensors (82), des dritten Sensors (83) und des ersten Detektors (84) zu steuern.

2. Das Versorgungssystem (1) nach Anspruch 1, umfassend einen Fluidanalysator (87), der so konfiguriert ist, dass er die Zusammensetzung des im Tank (8) enthaltenen Gases im flüssigen Zustand bestimmt.

3. Das Versorgungssystem (1) nach Anspruch 1 oder 2, wobei die Steuervorrichtung (80) einen zweiten Detektor (85) umfasst, der so konfiguriert ist, dass er einen Druck des im Tank (8) vorhandenen Gases ermittelt, wobei das Steuermodul (86) so konfiguriert ist, dass es das Durchflussregelelement (15) entsprechend dem vom zweiten Detektor (85) ermittelten Druck des Gases steuert.

4. Das Versorgungssystem (1) nach einem der vorstehenden Ansprüche, wobei die Rücklaufleitung (14) einen Durchflussmesser (88) umfasst, der so konfiguriert ist, dass er die Durchflussrate des in der Rücklaufleitung (14) zirkulierenden Gases im dampfförmigen Zustand ermittelt, wobei das Steuermodul (86) so konfiguriert ist, dass es das Durchflussregelelement (15) entsprechend der vom Durchflussmesser (88) ermittelten Gasdurchflussrate steuert.

5. Verfahren zum Steuern (100) eines Versorgungssystems (1) gemäß einem der vorstehenden Ansprüche, umfassend:
- einen Schritt des Vergleichens (101) der Temperatur des in dem ersten Versorgungskreislauf (2) zwischen dem ersten Wärmetauscher (6) und der Pumpe (10) vorhandenen Gases, und mit einem maximalen Temperaturschwellenwert (Tmax), der als Funktion des Drucks des im ersten Versorgungskreislauf (2) zwischen dem ersten Wärmetauscher (6) und der Pumpe (10) vorhandenen Gases, der Zusammensetzung des im Versorgungssystem (1) zirkulierenden Gases und einer Sicherheitsmarge bestimmt wird,
- wenn die Temperatur des in dem ersten Versorgungskreislauf (2) zwischen dem ersten Wärmetauscher (6) und der Pumpe (10) vorhandenen Gases größer ist als der maximale Temperaturschwellenwert (Tmax), wird ein Durchgangsquerschnitt des Durchflussregelelements (15) verringert,
- wenn die Temperatur des in dem ersten Versorgungskreislauf (2) zwischen dem ersten Wärmetauscher (6) und der Pumpe (10) vorhandenen Gases niedriger als der maximale Temperaturschwellenwert (Tmax) ist, wird ein Vergleichsschritt (102) zwischen der Temperatur des in der Rücklaufleitung (14) zwischen dem ersten Wärmetauscher (6) und dem Durchflussregelelement (15) vorhandenen Gases und einem optimalen Temperaturschwellenwert (Topt) durchgeführt, der anhand der Temperatur des im ersten Versorgungskreislauf zwischen dem Tank (8) und dem ersten Wärmetauscher (6) vorhandenen Gases (2) sowie einer Temperaturdifferenz bestimmt wird,
- wenn die Temperatur des in der Rücklaufleitung (14) zwischen dem ersten Wärmetauscher (6) und dem Durchflussregelelement (15) vorhandenen Gases größer ist als der optimale Temperaturschwellenwert (Topt), wird der Durchlassquerschnitt des Durchflussregelelements (15) verringert,
- wenn die Temperatur des in der Rücklaufleitung (14) zwischen dem ersten Wärmetauscher (6) und dem Durchflussregelelement (15) vorhandenen Gases unter dem optimalen Temperaturschwellenwert (Topt) liegt, wird der Durchlassquerschnitt des Durchflussregelelements (15) vergrößert.

6. Das Steuerungsverfahren (100) gemäß dem vorstehenden Anspruch, das im Laufe der Zeit wiederholt werden kann.

7. Das Steuerungsverfahren (100) gemäß Anspruch 5 oder 6, kombiniert mit Anspruch 2, wobei die Zusammensetzung des Gases durch den Fluidanalysator (87) bestimmt wird.

8. Das Steuerungsverfahren (100) gemäß Anspruch 5 oder 6, wobei die Zusammensetzung des Gases anhand technischer Unterlagen bestimmt wird.

9. Steuerverfahren (100) nach Anspruch 5 oder 6, wobei der maximale Temperaturschwellenwert anhand einer Datentabelle (106) für verschiedene Gasarten bestimmt wird.

10. Steuerungsverfahren (100) nach einem der Ansprüche 5 bis 9, wobei die Sicherheitsmarge und die Temperaturdifferenz einem Wert zwischen 1 °C und 3 °C entsprechen.

11. Das Steuerungsverfahren (100) gemäß einem der Ansprüche 5 bis 10, kombiniert mit Anspruch 3, wobei der vom zweiten Detektor (85) ermittelte Druck des Gases mit einem Druckschwellenwert (Pref) verglichen wird.

12. Das Steuerverfahren (100) gemäß dem vorstehenden Anspruch, umfassend einen Schritt des Unterbrechens (110) des Gasstroms innerhalb der Rücklaufleitung (14), wenn der vom zweiten Detektor (85) ermittelte Gasdruck niedriger ist als der Druckschwellenwert (Pref).

## Claims

1. A system (1) for supplying gas to at least one high-pressure gas-consuming apparatus (4) and at least one low-pressure gas-consuming apparatus (5) of a floating structure (20) comprising at least one tank (8) configured to contain the gas, the supply system (1) comprising:
- at least one first circuit (2) supplying gas to the high-pressure gas-consuming apparatus (4), comprising at least one pumping member (9) configured to pump the gas taken from the liquid state in the tank (8),
- at least one high-pressure evaporator (11) configured to evaporate the gas circulating in the first gas supply circuit (2),
- at least one second circuit (3) supplying gas to the low-pressure gas-consuming apparatus (5), comprising at least one compressor (13) configured to compress gas taken in the vapor state into the tank (8) to a pressure compatible with the requirements of the low-pressure gas-consuming apparatus (5),
- at least one gas return line (14) connected to the second supply circuit (3) downstream of the compressor (13) and extending to the tank (8),
- at least one first heat exchanger (6) and one second heat exchanger (7), each configured to exchange heat between the gas circulating in the return line (14) in the vapor state and the gas circulating in the first supply circuit (2) in the liquid state, the return line (14) comprising a flow-regulating member (15) arranged between the first heat exchanger (6) and the tank (8), a third sensor (83) configured to determine a temperature of the gas present in the return line (14) between the first heat exchanger (6) and the flow-regulating member (15), **characterized in that** the first supply circuit (2) comprises a pump (10) interposed between the first heat exchanger (6) and the second heat exchanger (7), and **in that** the supply system (1) comprises a device (80) for managing said supply system (1) which comprises at least one first sensor (81) and a first detector (84) respectively configured to determine a temperature and pressure of the gas present in the first supply circuit (2) between the first heat exchanger (6) and the pump (10), a second sensor (82) configured to determine a temperature of the gas present in the first supply circuit (2) between the tank (8) and the first heat exchanger (6), the management device (80) comprising a control module (86) configured to control the flow-regulating member (15) according to the characteristics of the gas determined by the first sensor (81), the second sensor (82), the third sensor (83) and the first detector (84).

2. The supply system (1) according to claim 1, comprising a fluid analyzer (87) configured to determine the composition of the gas in the liquid state contained in the tank (8).

3. The supply system (1) according to claim 1 or 2, wherein the management device (80) comprises a second detector (85) configured to determine a pressure of the gas present in the tank (8), the control module (86) being configured to control the flow-regulating member (15) according to the pressure of the gas determined by the second detector (85).

4. The supply system (1) according to any of the preceding claims, wherein the return line (14) comprises a flowmeter (88) configured to determine the flow rate of gas in the vapor state circulating in the return line (14), the control module (86) being configured to control the flow-regulating member (15) according to the gas flow rate determined by the flowmeter (88).

5. A method for controlling (100) a supply system (1) according to any of the preceding claims, comprising:
- a step of comparing (101) the temperature of the gas present in the first supply circuit (2) between the first heat exchanger (6) and the pump (10), and a maximum temperature threshold (Tmax) determined as a function of the pressure of the gas present in the first supply circuit (2) between the first heat exchanger (6) and the pump (10), a composition of the gas circulating in the supply system (1) and a safety margin,
- if the temperature of the gas present in the first supply circuit (2) between the first heat exchanger (6) and the pump (10) is greater than the maximum temperature threshold (Tmax), a passage section of the flow-regulating member (15) is reduced,
- if the temperature of the gas present in the first supply circuit (2) between the first heat exchanger (6) and the pump (10) is lower than the maximum temperature threshold (Tmax), a comparative step (102) is implemented between the temperature of the gas present in the return line (14) between the first heat exchanger (6) and the flow-regulating member (15) and an optimal temperature threshold (Topt) determined according to the temperature of the gas (2) present in the first supply circuit between the tank (8) and the first heat exchanger (6) and a temperature difference,
- if the temperature of the gas present in the return line (14) between the first heat exchanger (6) and the flow-regulating member (15) is greater than the optimal temperature threshold (Topt), the passage section of the flow-regulating member (15) is reduced,
- if the temperature of the gas present in the return line (14) between the first heat exchanger (6) and the flow-regulating member (15) is lower than the optimal temperature threshold (Topt), the passage section of the flow-regulating member (15) is increased.

6. The control method (100) according to the preceding claim, which can be repeated over time.

7. The control method (100) according to claim 5 or 6, combined with claim 2, wherein the composition of the gas is determined by the fluid analyzer (87).

8. The control method (100) according to claim 5 or 6, wherein the composition of the gas is determined by means of technical documentation.

9. The control method (100) according to claim 5 or 6, wherein the maximum temperature threshold is determined by virtue of a data table (106) of several types of gas.

10. The control method (100) according to any of claims 5 to 9, wherein the safety margin and the temperature difference correspond to a value between 1°C and 3°C.

11. The control method (100) according to any of claims 5 to 10, combined with claim 3, wherein the pressure of the gas determined by the second detector (85) is compared to a pressure threshold (Pref).

12. The control method (100) according to the preceding claim, comprising a step of interrupting (110) the gas flow within the return line (14) when the pressure of the gas determined by the second detector (85) is lower than the pressure threshold (Pref).
